# EUROPEAN PATENT SPECIFICATION

(11) **EP 0 825 337 B1**
(45) Date of publication and mention of the grant of the patent: **07.05.2003**
(21) Application number: 97113850.8
(22) Date of filing: 11.08.1997
(51) Int. Cl.: F02D 41/06, F02D 41/36, F02D 41/38

(54) **Method for internal combustion engine start-up**
Verfahren zum Anlassen einer Brennkraftmaschine
Méthode pour le démarrage d'un moteur à combustion interne

(30) Priority: 12.08.1996 US 695907
(43) Date of publication of application: 25.02.1998
(73) Proprietor: Detroit Diesel Corporation, Wilmington, Delaware 19801 (US)
(72) Inventor: Romzek, Martin A., Northville, Michigan 48167 (US)
(74) Representative: Grünecker, Kinkeldey, Stockmair & Schwanhäusser Anwaltssozietät

(56) References cited:
- EP-A- 0 534 491
- EP-A- 0 576 334
- US-A- 4 998 522
- US-A- 5 492 100

## Description

The invention relates to a method for reducing visible exhaust generated by an internal combustion engine according to the preamble portion of claim 1. More specifically, the invention relates to a method for reducing white smoke and the start-to-idle time of internal combustion engines for motor vehicles.

Fuel efficiencies and pollutants are two great concerns for consumers and environmental advocates alike. Thus, there is an almost continuous effort to increase efficiencies and reduce pollutants in the automotive industry. Internal combustion engines which combust diesel fuel take a greater time to reach an idle speed (in revolutions per minute) from a cold start than comparable spark ignition engines. This factor increases the consumption of fuel by such diesel powered engines. United States Patent 5,465,701, issued to Hunt on November 14, 1995, addresses the cold start issue for internal combustion engines in general. This reference discloses a fuel control system wherein a cold start fuel injector is mounted in an air intake passageway downstream from a throttle for the internal combustion engine. A three way air valve has an air inlet fluidly connected to the air intake upstream from the throttle. An engine control unit controls the actuation of the air valve and fluidly connects an inlet to a first outlet, a second outlet or both outlets. In addition, the air valve may close fluid communication between the inlet and the outlets. This device is undesirable because it introduces new hardware which must be coordinated with the operation of other necessary components of the internal combustion engine. More specifically, the fuel injector and the air valve must be coordinated such that the fuel injector and the air valve operate to reduce the amount of time it takes for the engine to reach an idling speed.

United States Patent 5,492,100, issued to Ishii et al. on February 20, 1996, discloses a fuel control device which prevents an internal combustion engine from using all of its cylinders except when a full cylinder operation mode can be reliably changed over from the partial cylinder operation mode. The valves are changed over using a control mechanism which selectively operates the valve change over. The valve change over is operated in a target operation mode selected by the operation mode selector. This patent does not, however, disclose the use of fuel ratios to minimize pollutants exhausted by an internal combustion engine fueled by diesel fuel that will reduce the amount of pollutants exhausted thereby.

Additionally, from prior art document US 4,781,160 there is known a method of operating an exhaust gas turbo-charged, low compression multi-cylinder diesel engine having two groups of cylinders, which is applicable during starting of the engine as well as in the lower load and speed ranges and which is used to improve starting and part load behavior and to increase combustion efficiency of said diesel engine. The fuel supply to one of said two groups of cylinders is cut out during starting and in the idling and lower load and speed ranges of the engine and is solely used in the upper load range.

Moreover, from prior art document JP 58131338 there is known a fuel supply apparatus for diesel engines having a plurality of unit injectors, wherein said plurality of unit injectors is divided into two groups by dividing the fuel metering pipes into two pipe groups. Fuel to each of the pipe groups is supplied by a common single line, wherein the fuel supply rate of each of the pipe groups is controlled by one solenoid valve arranged between the single line and the respective pipe groups. The solenoid valves are controlled by a computer, wherein a number of operative cylinders in the engine is reduced at the time of idling operation or low load operation of the engine.

Further, from prior art document US 5,042,444 there is known an apparatus and a method for altering the acoustic signature of an internal combustion engine having at least two cylinders in the low load range, wherein an electronic control module is provided which directly controls the actuation of a plurality of electrically controlled fuel injectors via respective control lines. Said electronic control module is adapted to momentarily alter or inhibit a fuel rate or a quantity control signal supplied to the injectors in a time varying fashion. Thus, the fuel delivery to operative cylinders is increased when other cylinders are cut out of normal operation to maintain a constant idle speed.

Still further, from prior art document US 4,787,350 there is known a dual-injection method in diesel engines particularly applicable during start up and acceleration to an operational speed and a device for fuel injection, wherein the injection process is divided into a preliminary injection and a primary injection in order to reduce the knocking noise of the engine and to increase the combustion efficiency. There is provided one injection nozzle per cylinder for both injections, which Is supplied with fuel by one high pressure pump. Said high pressure pump itself is supplied with fuel by a preliminary pressure pump.

Finally, from prior art document EP 534 491 there is known a fuel injection control system for a diesel engine applying a dual-injection method, wherein a pre-jet of fuel is injected into the combustion chamber based on a rotational angle of the crankshaft and, thereafter, a main jet of a larger quantity is injected. Said fuel Injection control system applies for starting up of the diesel engine.

It is an objective of the present invention to provide an improved method for reducing visible exhaust generated by an internal combustion engine as indicated above which allows the continuous use of the conventional engine components.

This objective is solved in an inventive manner by a method for reducing visible exhaust generated by an internal combustion engine having the features of claim 1.

According to a preferred embodiment, there is provided a method for reducing a time period between starting and idling an internal combustion engine having a plurality of cylinders and a camshaft is disclosed. The method includes the steps of measuring a fixed amount of fuel to be injected into each of the plurality cylinders. The rotational position of the camshaft is then measured. A preliminary portion of the fixed amount of fuel is injected into the cylinders when the camshaft is at a first predetermined rotational position. The remaining portion of the fixed amount of fuel is then injected into the cylinders when the camshaft is at a second predetermined rotational position which differs from the first predetermined rotational position.

One advantage of this embodiment is the ability to effectively reduce the time it takes for an internal combustion engine fueled by diesel fuel to reach an idling speed from a cold start. Another advantage associated with this embodiment is the ability to reduce the time period in which an internal combustion engine may reach an idling speed without modifying the hardware of the engine. Yet another advantage of this embodiment includes the reduction of pollutants exhausted by the internal combustion engine while the internal combustion engine is attempting to reach an idling speed.

In the following, the present invention is explained in greater detail with respect to several embodiments thereof in conjunction with the accompanying drawings, wherein:
Figure 1 is a perspective view partially cut away of an internal combustion engine fueled by diesel fuel;
Figure 2 is a block diagram of a first portion of an embodiment of the method as indicated above;
Figure 3 is a block diagram of a second portion of an embodiment of the method as indicated above;
Figure 4 is a graphic representation of the output when performing the method of Figure 2;
Figure 5 is a graphic representation of the output of exhaust white smoke using the method shown in Figure 2; and
Figure 6 is a graphic representation of the exhaust white smoke using the method of Figure 2 in combination with the method of Figure 3.

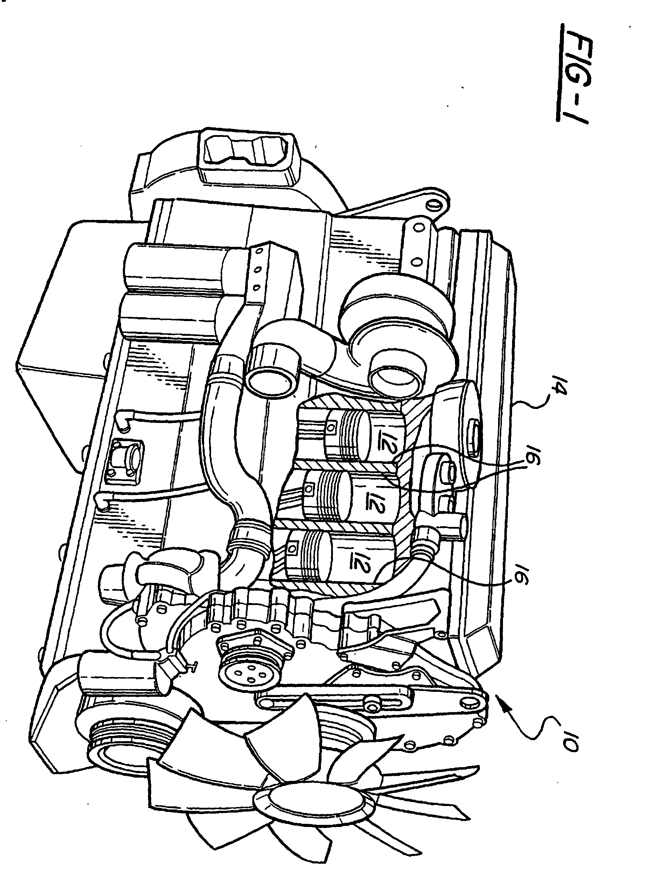

Referring to Figure 1, an internal combustion engine is generally indicated at 10. The internal combustion engine 10 is of the type which combusts diesel fuel. The diesel fuel is injected or forced into a plurality of cylinders 12 (three of six of the cylinders 12 are shown in the cut-away view). Although there are six cylinders in this embodiment, any number of cylinders may be used. A camshaft housed under the engine head 14 rotates relative to the plurality of cylinders 12 and is used as the mechanism for opening and closing the plurality of cylinders 12 to intake and exhaust manifolds. The camshaft moves valves which open and close inlet and outlet ports leading to and from these manifolds. For purposes of the discussion, the plurality of cylinders 12 is divided into a first half 16 and second half (not shown).

When the internal combustion engine 10 (hereinafter the diesel engine 10) is operated in a normal fashion, diesel fuel is injected into each of the plurality of cylinders 12 to generate power to rotate a crankshaft (not shown). When the diesel engine 10 is being started, it takes time for the diesel engine to reach an idling speed, approximately 900 RPM in one embodiment. During the period from initial start to the point at which the diesel engine 10 has reached idling speed, the diesel engine 10 exhausts a white smoke. This white smoke is caused by the inefficient, low temperature combustion of fuel by the engine 10 during the period of operation discussed above.

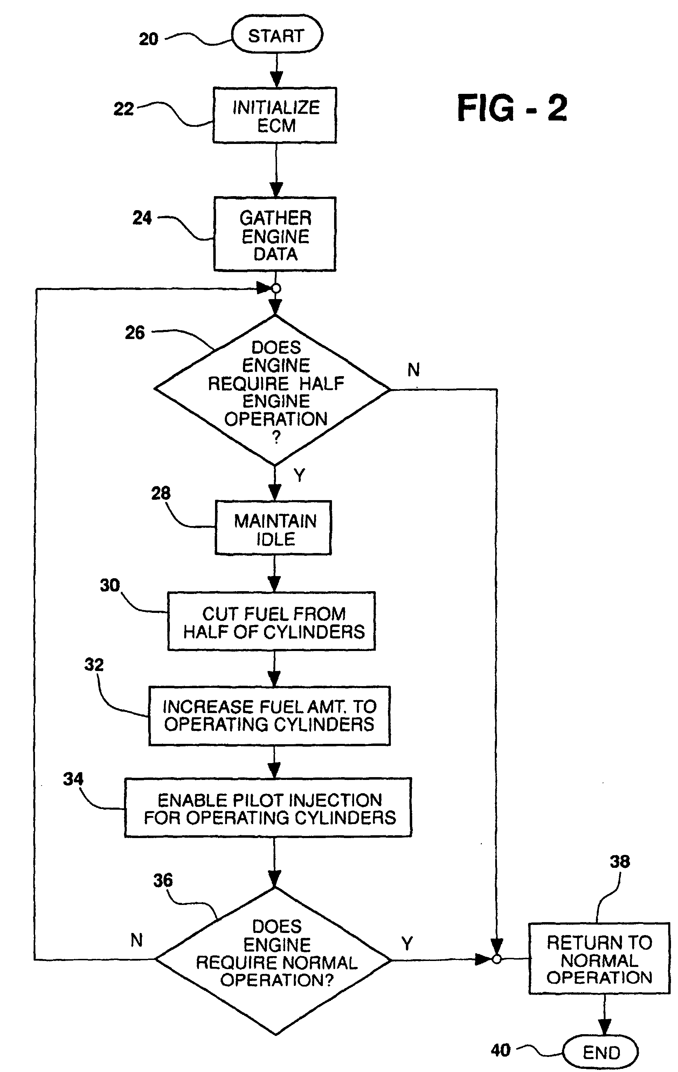

Turning to Figure 2, a method is disclosed which substantially reduces the amount of white smoke exhausted by the diesel engine 10 after starting and up to the point when the diesel engine 10 achieves idling speed. The method is started at 20 wherein the engine control module (ECM) is initialized at 22. Engine data is gathered at 24. The type of engine data which is gathered at 24 is the oil temperature, oil pressure, coolant temperature, RPM, manifold pressures, and the like.

Once the data is gathered, it is determined whether the diesel engine 10 requires half engine operation, at 26. If half engine operation is required, the idling speed is maintained at 28. The diesel fuel is then prevented from being combusted by the first half 16 of the plurality of cylinders 12 at 30. The operating cylinders, namely the second half of the plurality of cylinders 12 receive the majority of the fuel at 32. In one embodiment, the amount of fuel is approximately 80% to 90% of the total amount of fuel which would have been injected into the cylinder during full engine operation. An electronic pilot injection method is enabled for the operating cylinders at 34. The electronic pilot injection method will be discussed in greater detail subsequently. It then determined, at 36, whether the engine requires normal operation, i.e., full engine operation. If so, the diesel engine 10 is returned to normal operation at 38. Normal operation also occurs when the diesel engine 10 is accelerated past its idling speed. If not, however, more data regarding the diesel engine is gathered at 24. The method is terminated at 40 after the diesel engine 10 has returned to normal operation.

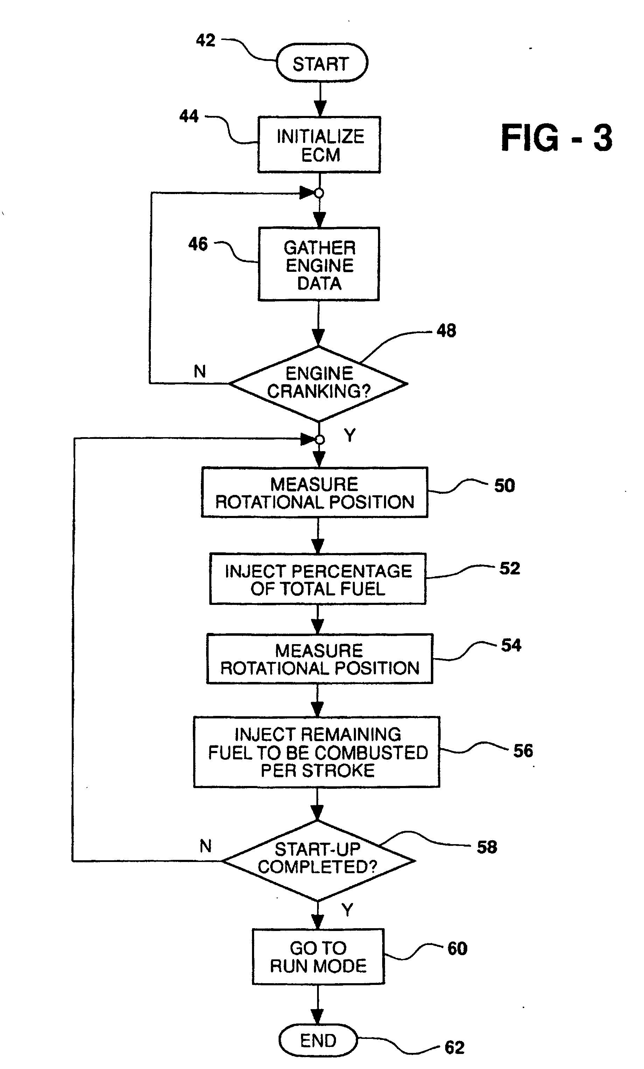

Referring to Figure 3, the electronic pilot injection method is shown in detail. The electronic pilot injection method is used in two different manners at two separate and distinct times between start-up and idling the diesel engine 10. First, the electronic pilot injection. method is used in combination with the half cylinder operation method to reduce the noise and vibration of the diesel engine 10 while operating in the half cylinder mode as is generally shown at 34 in Figure 2. In this manner of operation, the electronic pilot injection method is used primarily after the diesel engine 10 has reached an idling speed when it is used in combination with the half cylinder method.

Alternatively, the electronic pilot injection method is used independently from the half cylinder method. In this manner, the electronic pilot injection method is used prior to reaching an idling speed, i.e., immediately after a cold start. This method is used in this manner to reduce the time it takes for the diesel engine 10 to reach an idling speed after a cold start-up. Therefore, the electronic pilot injection method can be employed initially at start-up to reduce the amount of time required to reach an idling speed. However, it should be noted that it is only after the diesel engine 10 has reached an idling speed that the electronic pilot injection is used in combination with the half cylinder method, as disclosed above and shown in Figure 2, so that the noise and vibrations may be reduced.

Referring to Figure 3, the electronic pilot injection method is started at 42. The engine control module (ECM) is initialized at 44. Engine data, similar to that gathered at 24 in Figure 2, is gathered at 46. It is then determined whether the engine is cranking at 48. If the engine is not cranking, i.e., running, more engine data is gathered at 46. If the engine is running, the rotational position of the camshaft 14 is measured at 50. At a first predetermined rotational position, a preliminary portion of a fixed amount of diesel fuel is injected into a cylinder corresponding to the first predetermined rotational position. This first injection of the percentage of total fuel is preformed at 52. It will be appreciated by those skilled in the art that the first predetermined rotational position is actually a set of rotational positions for a given set of cylinders and wherein a single rotational position is associated with each single cylinder. Therefore, there are as many first predetermined rotational positions as there are cylinders in the diesel engine. In one embodiment, the first predetermined rotational position is between 10° and 20° before top dead center (BTDC). The preliminary portion of the fixed amount of diesel fuel injected at this first predetermined rotational position is approximately 5 to 15 percent of the fixed amount of diesel fuel.

The rotational position of the camshaft is measured again at 54. A remaining portion of the fixed amount of diesel fuel is injected into a cylinder when the camshaft is at a second predetermined rotational position which differs from the first predetermined rotational position. This injection of the remaining amount of diesel fuel is performed at 56. The remaining portion of diesel fuel may be the total amount of remaining fuel which would have been used in that particular cylinder at the time when the electronic pilot injection method is not being used. Alternatively, the fixed amount of injected diesel fuel may be reduced to 80 or 90 percent of the total amount of fuel designed to be consumed or combusted in that cylinder at that time. Once the remaining amount of fuel has been combusted per that stroke, it is determined whether the start-up has been completed at 58. If it has not been completed, the first measurement of the rotational position is taken again at 50. If the start-up has been completed, the method instructs the engine control module to enter a run mode at 60, a mode capable of running at a high RPM, accelerating or idling whereafter the method is terminated at 62.

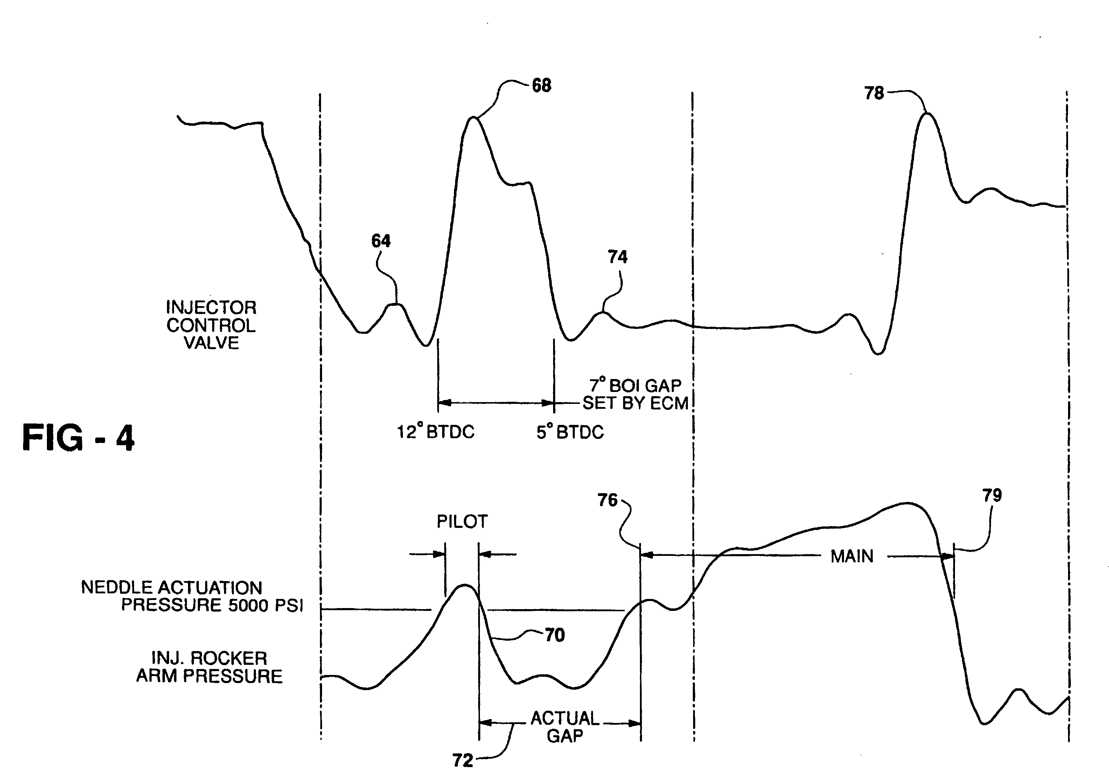

With regard to the electronic pilot injection method and referring to Figure 4, it is shown that a control valve (discussed subsequently) controls an injection rocker arm pressure which is used to open the inlet valve allowing diesel fuel to enter the cylinder to be combusted. The control valve is closed at 64. As pressure builds up along line segment 66, the injection rocker arm pressure also builds. When enough pressure in the control valve forces the injection rocker arm pressure to exceed 5,000 psi, the pilot, or preliminary portion, of diesel fuel is injected into the cylinder. The control valve is opened at 68 relieving the pressure in the injection rocker arm, at 70. Once the injection rocker arm pressures drops below 5,000 psi, the pilot is terminated. The control valve, in this embodiment, is closed between 12° BTDC and 5° BTDC creating a 7° difference to define an actual gap in the injection rocker arm pressure 72. The control valve is closed again at 74 allowing pressure in the injection rocker arm to increase. The main injection or the remaining portion of the fixed amount of diesel fuel is injected into the cylinder beginning at 76 and continues to be injected until the control valve is opened at 78 where the main injection ceases at 79.

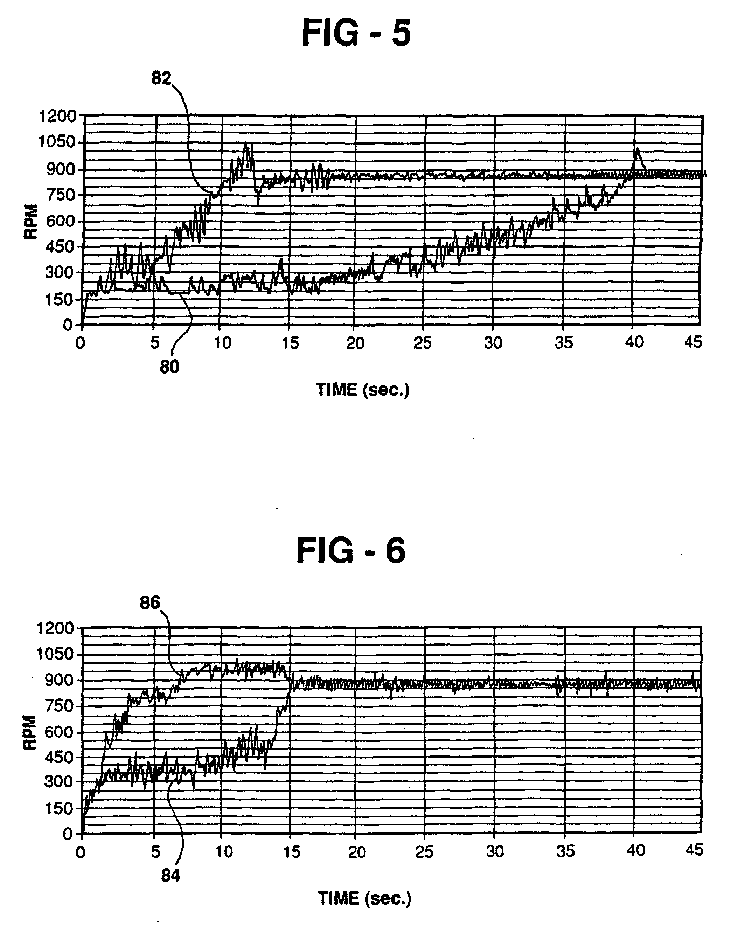

Referring to Figure 5, data is shown in graphic representation wherein the engine speed in the related art reaches 900 RPM at approximately 60 seconds for a cold start, whereafter it idles for approximately 480 seconds. The percentage of opacity of the white smoke is shown to reach 90% almost immediately. Thereafter, the percentage of opacity of white smoke decreases slowly until it reaches 30% opacity after 600 seconds. This data was accumulated on diesel engine operation using all of the cylinders and with the electronic pilot injection method.

On the other hand, using the half engine method along with the electronic pilot injection method, the output of white smoke is graphically presented in Figure 6. As illustrated in this Figure, the percentage opacity of the white smoke never reaches a value equal to the maximum percentage of capacity obtained when starting the diesel engine 10 without the half engine operation. Further, the percentage opacity drops off drastically and continues to reduce to almost zero percent until, at 78, the full engine is employed wherein the percentage opacity jumps to 30%.

The present invention has been described in an illustrative manner. It is to be understood that the terminology which has been used is intended to be in the nature of words of description rather than of limitation.

Many modifications and variations of the present invention are possible in light of the above teachings. Therefore, within the scope of the appended claims, the present invention may be practiced other than as specifically described.

## Claims

1. A method for reducing visible exhaust generated by an internal combustion engine combusting diesel fuel having a plurality of cylinders and a camshaft, the method comprising the steps of: running the internal combustion engine to combust the diesel fuel; accelerating the internal combustion engine to reach an idling speed;
maintaining the idling speed;
preventing the diesel fuel from being combusted by a first predetermined number of the plurality of cylinders;
measuring a fixed amount of diesel fuel to be injected into a second predetermined number of the plurality of cylinders, **characterized by**
injecting a preliminary portion of the fixed amount of diesel fuel when the camshaft is at a first rotational position; and
injecting a remaining portion of the fixed amount of the diesel fuel when the camshaft is at a second predetermined rotational position differing from the first predetermined rotational position, wherein the cylinders of the second predetermined number of the plurality of cylinders receive a majority of a total amount of fuel supplied to said cylinders during full engine operation.

2. Method according to claim 1, **characterized by** the step of combusting a majority of the diesel fuel in the second predetermined number of the plurality of cylinders.

3. Method according to claim 2, **characterized in that** the first predetermined number of the plurality of cylinders equals a first half of the plurality of cylinders.

4. Method according to claim 3 **characterized by** the step of providing the diesel fuel to the first half of the plurality of cylinders when the internal combustion engine accelerates past the idling speed.

5. Method according to claim 4 **characterized by** the step of collecting data defining performance of the internal combustion engine.

## Patentansprüche

1. Verfahren zur Reduzierung des durch eine Dieselkraftstoff- Brennkraftmaschine erzeugten sichtbaren Abgases, die eine Mehrzahl von Zylindern hat und eine Nockenwelle, wobei das Verfahren die Schritte aufweist von:
Betreiben der Brennkraftmaschine, um den Dieselkraftstoff zu verbrennen; Beschleunigen der Brennkraftmaschine, um eine Leerlaufdrehzahl zu erreichen; Aufrechterhalten der Leerlaufdrehzahl;
Hindern des Dieselkraftstoffes am Verbranntwerden durch eine erste, vorbestimmte Anzahl der Mehrzahl der Zylinder,
Zumessen eines festen Dieselkraftstoffbetrages, um in eine zweite vorbestimmte Anzahl der Mehrzahl der Zylinder eingespritzt zu werden,
**gekennzeichnet durch**
Einspritzen eines vorläufigen Anteils des festen Dieselkraftstoffbetrages, wenn die Nockenwelle in einer ersten Drehposition ist; und
Einspritzen eines verbleibenden Anteils des festen Dieselkraftstoffbetrages, wenn die Nockenwelle in einer zweiten vorbestimmten Drehposition ist, die von der ersten vorbestimmten Drehposition verschieden ist, wobei die Zylinder der zweiten vorbestimmten Anzahl der Mehrzahl der Zylinder eine Mehrheit eines zu den Zylindern während des vollen Motorbetriebes zugeführten Gesamtbetrages von Kraftstoff erhalten.

2. Verfahren nach Anspruch 1, **gekennzeichnet durch** den Schritt der Verbrennung eines Hauptteiles des Dieselkraftstoffes in der zweiten vorbestimmten Anzahl der Mehrzahl von Zylindern.

3. Verfahren nach Anspruch 2, **dadurch gekennzeichnet, dass** die erste vorbestimmte Anzahl der Zylindermehrzahl gleich einer ersten Hälfte der Mehrzahl von Zylindern ist.

4. Verfahren nach Anspruch 3, **gekennzeichnet durch** den Schritt des Bereitstellens des Dieselkraftstoffes für die erste Hälfte der Zylindermehrzahl, wenn die Brennkraftmaschine nach der Leerlaufdrehzahl beschleunigt.

5. Verfahren nach Anspruch 4, **gekennzeichnet durch** den Schritt des Sammeins von Daten, die die Leistung der Brennkraftmaschine definieren.

## Revendications

1. Procédé de réduction de gaz d'échappement visibles générés par un moteur à combustion interne consommant du carburant gazole et comportant une pluralité de cylindres et un arbre à cames, le procédé comprenant les étapes de :
- mise en marche du moteur à combustion interne en consommant du carburant gazole ;
- accélération du moteur à combustion interne, afin d'atteindre une vitesse de ralenti ;
- maintien de la vitesse de ralenti ;
- empêchement de la consommation du carburant gazole par un premier nombre prédéterminé de cylindres de la pluralité de cylindres ;
- mesure d'une quantité fixe de carburant gazole devant être injecté à l'intérieur d'un second nombre e cylindres de la pluralité de cylindres ;
**caractérisé par**
l'injection d'une partie préliminaire de la quantité fixe du carburant gazole, lorsque l'arbre à cames est dans une première position de rotation ; et l'injection de la partie restante de la quantité fixe du carburant gazole, lorsque l'arbre à cames est situé dans une seconde position de rotation prédéterminée différente de la première position de rotation prédéterminée, dans lequel les cylindres du second nombre prédéterminé de la pluralité de cylindres reçoivent une majorité de la quantité totale du carburant fourni aux dits cylindres au cours du fonctionnement total du moteur.

2. Procédé selon la revendication 1, **caractérisé par** l'étape d'une consommation d'une majorité du carburant gazole dans le second nombre de cylindres prédéterminé de la pluralité de cylindres.

3. Procédé selon la revendication 2, **caractérisé en ce que** le premier nombre de cylindres prédéterminé de la pluralité de cylindres est égal à une première moitié de la pluralité de cylindres.

4. Procédé selon la revendication 3 **caractérisé par** l'étape d'alimentation en carburant gazole de la première moitié de la pluralité de cylindres, lorsque le moteur à combustion interne dépasse la vitesse de ralenti.

5. Procédé selon la revendication 4 **caractérisé par** l'étape de recueil de données définissant les performances du moteur à combustion interne.
